# EUROPEAN PATENT SPECIFICATION

(11) **EP 1 456 564 B1**
(45) Date of publication and mention of the grant of the patent: **28.09.2005**
(21) Application number: 02788348.7
(22) Date of filing: 10.12.2002
(51) Int. Cl.: F16H 25/00

(54) **SCREW ACTUATOR WITH LOCKING MECHANISM**
SCHRAUBENAKTUATOR MIT VERRIEGELUNGSMECHANISMUS
ACTIONNEUR A VIS ET MECANISME D'ARRET

(30) Priority: 13.12.2001 IT TO20011164
(43) Date of publication of application: 15.09.2004
(73) Proprietor: SKF INDUSTRIE S.p.A., 10121 Torino (IT)
(72) Inventor: KOLLAARD, Nico, NL-3417 EK Montfoort (NL); VISSERS, Carl, NL-5275 BT Den Dungen (NL); KAPAAN, Henk, NL-3435 DM Nieuwegein (NL); ZWARTS, Koos, NL-3438 VA Nieuwegein (NL); VAN LEEUWEN, Bernie, NL-3437 JM Nieuwegein (NL)
(74) Representative: Fioravanti, Corrado
(86) International application number: PCT/IB2002/005367
(87) International publication number: WO 2003/050437

(56) References cited:
- EP-A- 1 138 971
- WO-A-00/42333
- WO-A-02/36398
- DE-A- 19 823 568
- DE-C- 10 023 716
- US-B1- 6 315 092

## Description

The invention is related to a screw actuator, comprising a housing, a screw mechanism with a screw and a nut, one of which is rotatably supported with respect to the housing, and a motor which is drivingly connected to the screw mechanism, a mechanical locking device comprising a pawl member and a rotatable member connected to a rotatable component of the motor and/or the screw mechanism, and a control means for displacing said pawl member between a locking position and a free position and a reduction gear mechanism , one of the gear wheels thereof being the rotating member and carrying teeth for engagement with the pawl member.

Such a screw actuator is known from WO-A-00/42333 and can be applied for several purposes, e.g. for actuating a vehicle brake, a vehicle clutch, etc. In some cases, it is desirable to fix the screw actuator in a specific position so as to maintain the component which is actuated in a desired state. As an example, the long term parking brake state of a vehicle brake is mentioned.

Generally, it is not desirable to keep the motor of the screw actuator in a constantly energised state (live) so as to hold the desired state. For instance, in the case of an electrically energised motor, the battery would then become depleted.

The pawl means of the screw actuator according to WO-A-00/42 333 can be used to fix the screw mechanism in a specific position; thus, it is not necessary to maintain the motor in an energised state, which means that the power source can be saved.

In this known screw actuator, the locking device is driven through an electro-magnet which is held in the locking position under the influence of a spring.

The object of the invention is to provide a screw actuator which provides the possibility of sustained position fixation in an efficient and purely mechanical way.

The mechanical locking means can be carried out in several ways, e.g. as friction components. Preferably, the rotatable member comprises teeth which are engaged by the pawl member in the locking position. Said teeth may be either radially or axially oriented.

A sensor may be provided which detects rotations of the rotatable component through the teeth thereof.

According to a the invention, the locking means comprise an axially fixed, rotatable drive member which engages the pawl member through rolling elements which are in contact with raceways on the facing surfaces of the drive member and the pawl member, the raceways of at least one of the drive member and the pawl member constituting ramps which have a continuous slope in circumferential direction, such that upon rotating the drive member back and forth, the pawl member is moved to and fro.

The pawl member and the drive member are freely rotatable with respect to each other within a limited arc of rotation defined by an end stop, such that the pawl member is rotated together with the drive member after the pawl member has been displaced from the drive member and has been brought in the locking position in which it is rotationally fixed to the rotatable component of the motor. In that position the screw is rotated as well.

The drive member is connected to a hand brake mechanism. Preferably, the hand brake mechanism comprises a cable which is wound around the drive member or around a shaft connected thereto.

The above movements of the pawl member are made possible by the fact that it is rotatably supported on a shaft connected to the screw mechanism, with a rotation coupling which provides a rotation connection between the pawl member and the shaft up to a threshold torque value, and which allows relative rotations above said threshold torque value.

In this respect, the rotation coupling comprises a flattened land on the shaft, and a preload member accommodated in a radial bore of the pawl member, said preload member being resiliently urged into engagement with the flattened land.

The invention can be used in a brake calliper, comprising a housing and two opposite brake pads, a screw mechanism with a screw and a nut, one of which is rotatably supported with respect to the housing, and a motor which is drivingly connected to the screw mechanism.

According to the invention, a mechanical locking device is provided comprising a pawl member and a rotatable member connected to a rotatable component of the motor and/or the screw mechanism, and a control means for displacing said pawl member between a locking position and a free position.

The invention will now be described further with reference to the embodiment shown in the figures.
Fig. 1 shows a cross section through a brake calliper with an electromagnetically actuated locking device.
Fig. 2 - 4 show views, partially cut away, through a brake calliper with a screw actuator according to the invention, i.e. with a mechanically actuated locking device.
Fig. 5 - 7 show details of the control phases of the embodiment according to figs. 2 - 4.

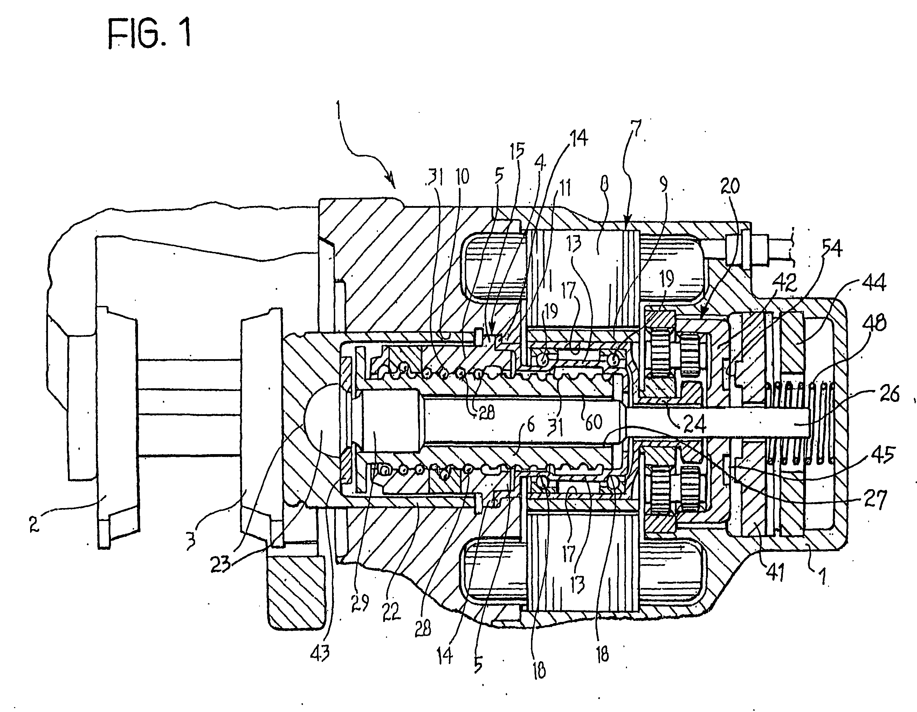

The brake calliper shown in figure 1 comprises a screw actuator having a nut 5, which by means of balls 28 rotatably supports a screw 6. The nut 5 and screw 6 have appropriately shaped screw type grooves 31.

The electric motor 7 has a stator 8 connected to the housing 1, as well as a rotor 9 which is supported on a rotatable sleeve 17. The rotatable sleeve 17 is rotatably mounted on an inner stationary sleeve 13. The inner sleeve 13 comprises raceways 18 for the bearings 19; as an alternative, the sleeve 13 may of course carry the inner rings of separate bearings.

The inner sleeve 13 has an outwardly extending flange 14 which is held between a support abutment 11 extending radially inwardly of the housing 1, as well as a radially outwardly extending nut flange 15.

The radially outwardly extending nut flange 15, as well as the flange 14 of sleeve 13 are accommodated within a cylindrical bore 10 of the housing 1. The support abutment 11 extends radially inwardly with respect to the wall of the cylindrical bore 10.

Non-rotatably held within the cylindrical bore 10 is a cylindrical piston 22 within which an actuating head 29 is accommodated. The actuating head 29 engages the screw 6 of the screw actuator 4 and is coupled to the cylindrical piston 22 through a rotatable bearing 23.

By activating the motor 7, the rotor 9 drives the screw 6 of the screw actuator 4 via a shaft 26. The shaft 26 is connected on one side to a gear reduction mechanism 20 which is driven by the rotor 9 through the rotatable sleeve 17 and the inwardly extending flange 24 thereof. At the other side, the central drive shaft 26 extends into a cylindrical bore 27 of the screw 6; the shaft 26 is non-rotatably coupled to the screw 6 through a splined/grooved coupling 60.

As a result, the screw 6 is rotated and moved outwardly, so as to bring the brake pad 3 closer to brake pad 2 for exerting a braking action on a brake disk (not shown).

As a result of the compressive forces thereby exerted on the nut 5, the stationary support sleeve 13 is held firmly clamped against the support abutment 11 of the housing 1.

With the aim of accommodating misalignments, which might damage the raceways and balls of the screw actuator, the flange 14 of sleeve 13 as well as the nut flange 15 may be curved preferably along the surface of an imaginary sphere, so as to allow some adaptation of the screw actuator 4 together with the rotor 9 and the gear reduction mechanism 20.

In order to attain for a long-term parking brake functional application, a gear wheel 42 of the gear reduction mechanism 20 is provided with teeth 45 that can be engaged by a non-rotatable locking member 41, in particular by the teeth 54 thereof. The locking member 41, axially movable parallel to the shaft 26, is displaced into an inactive position by a fixed electromagnet 44 which is energised when the parking brake is inoperative.

As soon as the parking brake is activated, the electromagnet 44 is de-energised causing the locking member 41 to engage the teeth 45 of the gear wheel 42 under the influence of a compression spring 48. By locking the rotation of the gear wheel 42, the actuator is thus locked for maintaining the parking brake action.

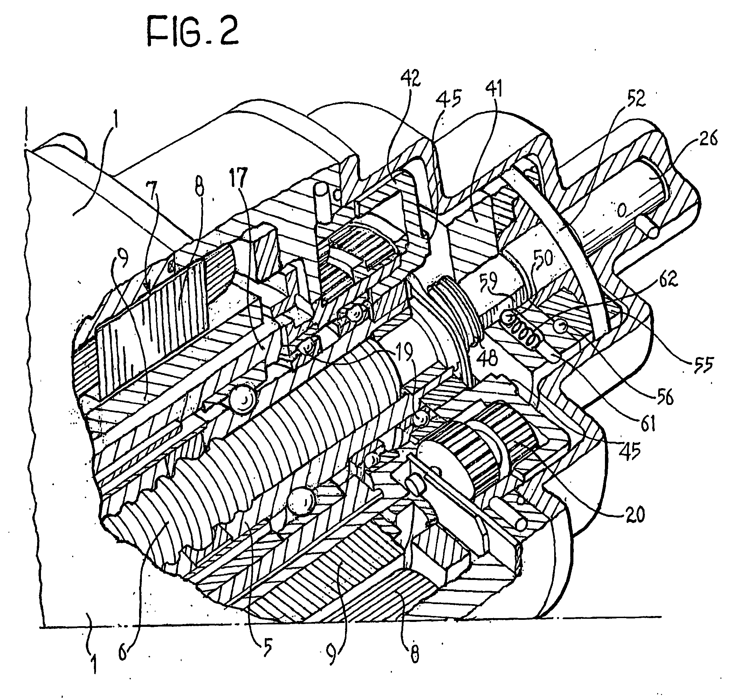

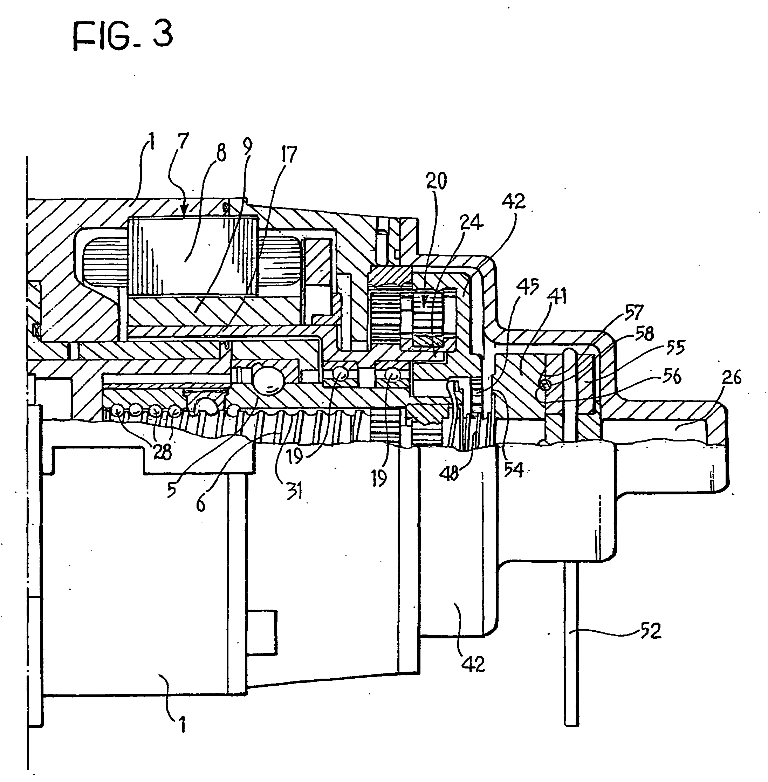

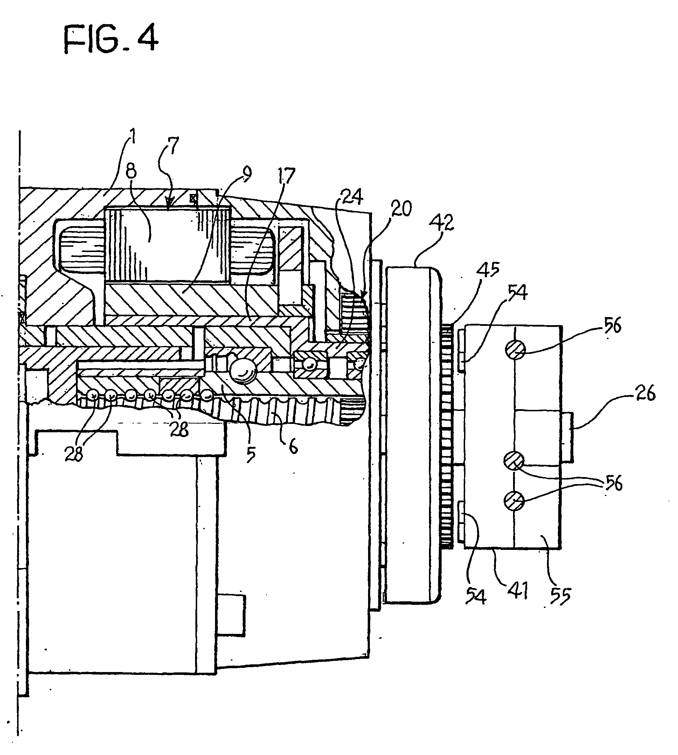

Figs. 2 - 4 show a brake calliper which to a large extent corresponds to the brake calliper as shown in fig. 1. However, this brake calliper comprises a screw actuator according to the invention, i.e. an actuator which has a control device that locks the actuator in a braked state not by means of an electromagnet, but in a purely mechanical way.

The locking device comprises an axially fixed, rotatable drive member 55 which is accommodated on the shaft 26. This drive member 55 engages the pawl member 41 through rolling elements 56. These rolling elements 56 are accommodated in raceways 58 of the drive member 55, which have a constant depth, and also in raceways 57 of the pawl member 41 which are ramp shaped, that is which have a continuously increasing depth.

The drive member 55 is connected to a pulley cable 52 which is wound around the drive member 55. Upon pulling the pulley cable 52, the drive member 55 is rotated, which leads to an increased distance in axial direction of the pawl member 41 with respect to said drive member 55 through the raceways 57, 58 and the rolling elements 56. The pawl member 41 comprises teeth 54, which in this way are brought into engagement with the teeth 45 of the gear wheel 42.

The pawl member 41 is initially held non-rotatable with respect to the shaft 26 by means of a rotation coupling. This rotation coupling comprises a flattened land 59 on the shaft 26, and a preloaded ball 50 which is resiliently urged into contact with the flattened land 59 by means of a coil spring 62. Both the ball 50 and the coil spring 62 are accommodated within a bore 61 of the pawl member 41.

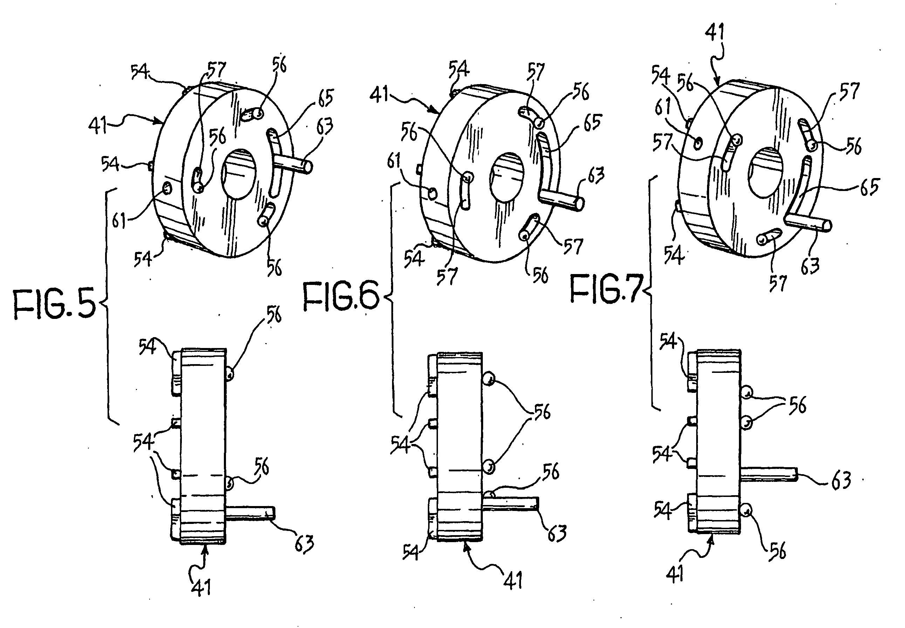

By means of this rotation coupling, the pawl member 41 is initially held non-rotatable with respect to the shaft 26, also when the drive member 55 is rotated so as to displace the pawl member 41 towards the gear wheel 42. After the drive member 55 has been rotated over a certain distance, a free rotation thereof with respect to the pawl member 41 is prevented by means of an end stop (see figures 5 - 7). Upon further rotation, the pawl member 41 is rotated together with the further rotation of the drive member 55, whereby the screw 6 of the screw mechanism 4 is rotated and thus a hand brake action can be obtained.

In figs. 5 - 7, there are shown several steps in obtaining the hand brake action through the drive member 55 and the pawl member 41. The drive member 55 comprises a pin 63, which protrudes into a groove 65 of the pawl member 41. Fig. 5 shows the locked position of the locking device in question, that is with no hand brake action applied.

Fig. 6 shows the initial rotation of the drive member 55 with respect to the pawl member 41, which is held rotationally fixed onto the shaft 26 by means of the rotation coupling (see figs. 2 - 4). Thereby, the pawl member 41 is urged away from the drive member 55 as described before. As a result, the teeth 54 of the pawl member 41 come into engagement with the teeth 45 of the gear wheel 42.

Further rotation of the drive member 55 makes the pawl member 41 rotate as well, having regard to the fact that the pin 63 abuts the end of the groove 65 (end stop). Thereby, the pawl member 41 is rotated together with the further rotation of the drive member 55, whereby a rotation of the teeth 54, and thus a rotation of the teeth 45 and the gear wheel 42 is obtained.

Consequently, the screw 6 of the screw mechanism is rotated, whereby a braking action is obtained.

## Claims

1. A screw actuator, comprising
a housing (1),
a screw mechanism (4) with a screw (6) and a -nut (5), one of which is rotatably supported with respect to the housing (1),
a motor (7) which is drivingly connected to the screw mechanism (4),
a mechanical locking device comprising a pawl member (41) and a rotatable member connected to a rotatable component of the motor (7) and/or the screw mechanism (4),
a control means for displacing said pawl member (41) between a locking position in which it is rotationally fixed to the rotatable component of the motor (7) and a free position
in which the pawl member (41) is not rotationally fixed to a rotatable component of the motor (7) a gear reduction mechanism (20), one of the gear wheels (42) thereof being the rotating member and carrying teeth (45) for engaging with the pawl member (41);
**characterised in that** the control means comprise an axially fixed, rotatable drive member (55) which engages the pawl member (41) through rolling elements (56) which are in contact with raceways (57, 58) on the facing surfaces of the drive member (55) and the pawl member (41), the raceways (57) of at least one of the drive member and the pawl member (41) constituting ramps which have a continuous slope in circumferential direction, such that upon rotating the drive member (55) back and forth, the pawl member (41) is moved axially to and fro.

2. A screw actuator according to claim 1, wherein the pawl member (41) and the drive member (55) are freely rotatable with respect to one another within a limited arc of rotation defined by an end stop (63, 65), such that the pawl member (41) is rotated together with the drive member (55) after the pawl member (41) has been displaced from the drive member (55) and has been brought in the locking position.

3. A screw actuator according to claim 2, wherein the drive member (55) is connected to a hand brake mechanism.

4. A screw actuator according to claim 3, wherein the hand brake mechanism comprises a cable (52) which is wound around the drive member (55) or around a shaft connected thereto.

5. A screw actuator according to any one of claims 1 to 4, wherein the pawl member (41) is rotatably supported on a shaft (26) connected to the screw mechanism, a rotation coupling providing a rotation connection between the pawl member (41) and the shaft (26) up to a threshold torque value, and which- allows relative rotations above said torque value.

6. A screw actuator according to claim 5, wherein the rotation coupling comprises a flattened land (59) on the shaft (26), and a preload member (50) accommodated in a radial bore (61) of the pawl member (41), said preload member (50) being resiliently urged into engagement with the flattened land (59).

## Patentansprüche

1. Spindelstellglied, das enthält
ein Gehäuse (1),
einen Spindelmechanismus (4) mit einer Spindel (6) und einer Mutter (5), wobei einer dieser Bauteile zum Gehäuse (1) drehbar gelagert ist,
einen Motor (7), der antriebsmäßig mit dem Spindelmechanismus (4) verbunden ist,
eine mechanische Verriegelungseinrichtung, die ein Sperrelement (41) und ein drehbares Element enthält, das mit einem drehbaren Bauelement des Motors (7) und/oder des Spindelmechanismus (4) verbunden ist,
eine Steuereinrichtung, um das Sperrelement (41) zwischen einer Verriegelungsstellung, in der es zum drehbaren Bauelement des Motors (7) hinsichtlich einer Drehung fixiert ist, und einer freien Stellung auszulenken, in der das Sperrelement (41) hinsichtlich einer Drehung nicht an einem drehbaren Bauelement des Motors (7) fixiert ist,
einen Untersetzungsgetriebe-Mechanismus (20), von dem eines der Zahnräder (42) das Drehelement bildet und Zähne (45) trägt, um in das Sperrelement (41) einzugreifen;
**dadurch gekennzeichnet, dass** die Steuereinrichtung ein axial fixiertes, drehbares Antriebselement (55) enthält,
das in das Sperrelement (41) über Rollelemente (56) eingreift, die mit Laufbahnen (57, 58) auf einander gegenüber liegenden Flächen des Antriebselements (55) und des Sperrelements (41) in Berührung stehen, wobei die Laufbahnen (57) zumindest des Antriebselements oder des Sperrelements (41) Rampen bilden, die in Richtung des Umfangs eine fortlaufende Neigung besitzen, so dass das Sperrelement (41) hin und her bewegt wird, wenn das Antriebselement (55) nach vor und zurück gedreht wird.

2. Spindelstellglied gemäß Anspruch 1, wobei das Sperrelement (41) und das Antriebselement (55) zueinander innerhalb eines begrenzten Drehbogens frei drehbar sind, der von einem Endanschlag (63, 65) gebildet wird, so dass das Sperrelement (41) zusammen mit dem Antriebselement (55) in Drehung versetzt wird, nachdem das Sperrelement (41) vom Antriebselement (55) ausgelenkt und in die Verriegelungsstellung gebracht wurde.

3. Spindelstellglied gemäß Anspruch 2, wobei das Antriebselement (55) mit einem Handbremsen-Mechanismus verbunden ist.

4. Spindelstellglied gemäß Anspruch 3, wobei der Handbremsen-Mechanismus ein Kabel (52) enthält, das um das Antriebselement (55) oder um eine damit verbundene Welle geschlungen ist.

5. Spindelstellglied gemäß irgendeinem der Ansprüche 1 bis 4, wobei das Sperrelement (41) auf einer Welle (26) drehbar gelagert ist, die mit dem Spindelmechanismus verbunden ist, wobei eine Drehkupplung eine Drehverbindung zwischen dem Sperrelement (41) und der Welle (26) bis zu einem Schwellenwert des Drehmoments liefert und oberhalb dieses Drehmomentwerts eine relative Drehung zulässt.

6. Spindelstellglied gemäß Anspruch 5, wobei die Drehkupplung ein abgeflachtes Feld (59) auf der Welle (26) sowie ein Vorspannelement (50) enthält, das in einer radialen Bohrung (61) des Sperrelements (41) aufgenommen wird, wobei das Vorspannelement (50) mit dem abgeflachten Feld (59) elastisch in Eingriff gedrückt wird.

## Revendications

1. Actionneur à vis, comprenant :
un boîtier (1),
un mécanisme à vis (4) doté d'une vis (6) et d'un écrou (5), l'un de ces derniers étant supporté de manière rotative par rapport au boîtier (1),
un moteur (7) qui est relié de manière entraînante au mécanisme à vis (4),
un dispositif de verrouillage mécanique comprenant un élément de cliquet (41) et un élément rotatif relié à un composant rotatif du moteur (7) et/ou du mécanisme à vis (4),
un moyen de commande destiné à déplacer ledit élément de cliquet (41) entre une position de verrouillage dans laquelle il est fixé de manière rotative au composant rotatif du moteur (7), et une position libre dans laquelle l'élément de cliquet (41) n'est pas fixé de manière rotative à un composant rotatif du moteur (7),
un mécanisme de réduction à engrenages (20), dont l'une des roues d'engrenage (42) est l'élément rotatif et comporte des dents (45) pour s'engager avec l'élément de cliquet (41) ;
**caractérisé en ce que** le moyen de commande comprend un élément d'entraînement rotatif axialement fixe (55) qui engage l'élément de cliquet (41) par le biais d'éléments roulants (56) qui sont en contact avec des chemins de roulement (57, 58) sur les surfaces se faisant face de l'élément d'entraînement (55) et de l'élément de cliquet (41), les chemins de roulement (57) d'au moins un élément parmi l'élément d'entraînement et l'élément de cliquet (41) constituant des rampes qui ont une inclinaison continue dans la direction circonférentielle, de sorte que lors de la rotation de l'élément d'entraînement (55) en va-et-vient, l'élément de cliquet (41) se déplace axialement en va-et-vient.

2. Actionneur à vis selon la revendication 1, dans lequel l'élément de cliquet (41) et l'élément d'entraînement (55) peuvent tourner librement l'un par rapport à l'autre dans un arc de rotation limité défini par un butoir d'extrémité (63, 65), de sorte que l'élément de cliquet (41) tourne avec l'élément d'entraînement (55) après que l'élément de cliquet (41) a été déplacé depuis l'élément d'entraînement (55) et a été amené dans la position de verrouillage.

3. Actionneur à vis selon la revendication 2, dans lequel l'élément d'entraînement (55) est relié à un mécanisme de frein à main.

4. Actionneur à vis selon la revendication 3, dans lequel le mécanisme de frein à main comprend un câble (52) qui est enroulé autour de l'élément d'entraînement (55) ou autour d'un arbre relié à celui-ci.

5. Actionneur à vis selon l'une quelconque des revendications 1 à 4, dans lequel l'élément de cliquet (41) est supporté de manière rotative sur un arbre (26) relié au mécanisme à vis, un couplage de rotation fournissant une liaison de rotation entre l'élément de cliquet (41) et l'arbre (26) jusqu'à une valeur de couple seuil, et permettant des rotations relatives au-dessus de ladite valeur de couple.

6. Actionneur à vis selon la revendication 5, dans lequel le couplage de rotation comprend un méplat aplati (59) sur l'arbre (26), et un élément de pré-charge (50) logé dans un alésage radial (61) de l'élément de cliquet (41), ledit élément de pré-charge (50) étant poussé de manière élastique en engagement avec le méplat aplati (59).
